# EUROPEAN PATENT SPECIFICATION

(11) **EP 1 093 412 B1**
(45) Date of publication and mention of the grant of the patent: **01.09.2004**
(21) Application number: 99957036.9
(22) Date of filing: 17.02.1999
(51) Int. Cl.: B32B 27/08, B44F 1/10, B32B 31/00

(54) **LUMINESCENT PERFORATED ONE WAY VISION FILM**
LUMINISZIERENDE, PERFORIERTE, EINSEITIG DURCHSEHBARE FOLIE
FILM PERFORE LUMINESCENT A VISION UNIDIRECTIONNELLE

(30) Priority: 15.06.1998 US 98702
(43) Date of publication of application: 25.04.2001
(73) Proprietor: MINNESOTA MINING AND MANUFACTURING COMPANY, St. Paul, Minnesota 55133-3427 (US)
(72) Inventor: MURPHY, David, J., Saint Paul, MN 55133-3427 (US); ACITO, Paul, L., Saint Paul, MN 55133-3427 (US); BULL, Sally, J., Saint Paul, MN 55133-3427 (US)
(74) Representative: VOSSIUS & PARTNER
(86) International application number: PCT/US1999/003422
(87) International publication number: WO 1999/065679

(56) References cited:
- WO-A-94/17766
- WO-A-96/11798
- US-A- 4 673 609
- US-A- 5 525 177
- US-A- 5 679 435

## Description

The present invention relates to films which allow, when mounted on a transparent surface such as a window, an image to be seen when viewed from one side, and a view through the window when viewed from another side.

The advertising industry, as well as many other industries, desire the ability to display graphic images on a wide variety of surfaces. One type of surface which has attracted a great deal of attention in recent years is windows or other transparent or translucent surfaces. In application of image graphics to such surfaces: it is desirable that the image be visible when viewed from one side of the window white leaving the window and image substantially transparent when viewed from the other side or the window. Thus, for example, if the image is to be mounted on a window of a vehicle, such as a bus or taxicab, it is desired that passengers be able to see clearly through the window, while pedestrians outside of the vehicle see the image.

This effect is identified in the image graphics industry as "one way vision" through the film, and films offering unidirectional viewing arc referred to herein as "one way vision films". One way vision films typically are multi-layer constructions having a film adapted to receive an image on one surface and a dark (usually black) film or ink applied to the opposite surface. A laminate of a pressure sensitive adhesive and removable backing, or carrier material, is applied to the exposed surface of either film which allows the printed graphic to be handled and applied to a window. Of course, prior to application to a window, the backing material must be removed to expose the pressure sensitive adhesive.

Transparency through the film is usually achieved by providing numerous perforations through the film. The perforations are sized and spaced such that, when viewed from the imaged side, the viewer has a tendency to focus on the image, while when viewed from the dark side, the viewer has a tendency to see through the film.

The one way vision effect of the film is achieved by the known property of windows in which, when viewed from an area of bright ambient light into a darker area windows appear dark or opaque, while when viewed from an area of dark ambient light into a brighter area windows are transparent. This effect, although not entirely controlling, allows viewers in darker areas, such as the interiors of vehicles and buildings, to see through the unidirectional film, while people in bright outdoor ambient light will see the graphic printed on the one way vision film.

When used in applications in which the window acts as a barrier between two areas, such as indoors and outdoors or between two rooms in a commercial establishment (e.g., a bank where workers at desks can view the lobby), the one way vision film can be applied to either surface of the window. The application to the same side as where the person is when viewing the image graphic is a "first surface" application, whereas the application to the side of the window opposing the side where the person is viewing the image graphic is a "second surface" application.

Materials used to make one way vision films typically have both first surface and second surface constructions to accommodate the desired location of application to the window. For example, one might desire to apply an image graphic construction to a second surface when the first surface is exposed to the outside environment. On other occasions, it may be too difficult to apply an image graphic construction to a second surface such as when a motor bus is being decorated on its exterior including the windows.

A number of patents have issued in recent years describing the one way vision effect and the use of films to achieve that effect. Among these publications are U.S. Pat. No. 4,673,609 (Hill): U.S. Pat. No. 5.525,177 (Ross); U.S. Pat. No. 5,609,938 (Shield; corresponding to PCT Publication WO 96/11798); and U.S. Pat. Nos. 5,550.346 (Andriash et al.) and 5,679,435 (Andriash). This last patent discloses the use of retroreflective material to achieve a superior reflecting image when a point-source light shines on to the imaged surface at night. But light is required for the retroreflective effect. U.S Patent No. 4,673,609 describes transparent or translucent panels having a design or pattern visible from at least one side and not the other. PCT Publication WO 94/17766 describes a photoluminescent retroreflective sheeting for use in structures when a power outage occurs. PCT Publication WO 96/11798 describes an image display apparatus with holes for opposite side viewing.

In view of the above, a need exists for a one way vision film which can provide different lighting effects regardless of whether the film is applied to a first surface or a second surface of a transparent or translucent substrate.

One aspect of the present invention is a combination for preparing a one way vision film comprising:
(a) an imageable luminescent component 72 comprising:
   (i) a perforated, opaque light absorbing layer 82; and
   (ii) a perforated, opaque, luminescent, imageable film layer 76; as well as
(b) an attachment component 74 comprising:
   (iv) a substantially transparent hot melt adhesive layer 100;
   (v) a substantially transparent, non-perforated scrim layer 90; and
   (vi) a substantially clear pressure sensitive adhesive layer 96.

Another aspect of the present invention is a one way vision film comprising the following components in the following order:
(i) a perforated, opaque light absorbing layer 82;
(ii) a perforated, opaque, luminescent, imageable film layer 76;
(iii) a perforated image layer 110;
(iv) a substantially transparent hot melt adhesive layer 100;
(v) a substantially transparent, non-perforated scrim layer 90; and
(vi) a substantially clear pressure sensitive adhesive layer 96.

Another aspect of the present invention is a process for preparing a one way vision film comprising the steps of:
(a) providing an imageable luminescent component 72 comprising:
   (i) a perforated, opaque light absorbing layer 82; and
   (ii) a perforated, opaque, luminescent, imageable film layer 76;
(b) providing an attachment component 74 comprising:
   (iv) a substantially transparent hot melt adhesive layer 100;
   (v) a substantially transparent, non-perforated scrim layer 90; and
   (vi) a substantially clear pressure sensitive adhesive layer 96;
(c) imaging the imageable luminescent component 72 to form a perforated image layer 110 on the surface of the luminescent, imageable film layer 76;
(d) laminating the imageable luminescent component 72 and the attachment component 74 together to form the one way vision film.

Another aspect of the present invention is a photoluminescent one way vision film.

Another aspect of the present invention is an electroluminescent one way vision film.

A feature of the present invention is the display of an image to the viewer where the image itself provides sufficient light for a viewer to see the image. In that respect, for a predetermined duration, the image graphic is self-illuminating.

An advantage of the present invention is the ability to provide a similar or different image when principal lighting on the image graphic changes from external sources to self-illumination.

For purposes of this invention, "luminescent" means both photoluminescent and electroluminescent.

"Photoluminescent" means the ability of a material to absorb photons and emit visible light. Photoluminescent films are known and are commercially used to provide signage that warns, cautions, and provides other messages conveying safety information. Frequently, these films are combined with an adhesive to form a photoluminescent tape. Sometimes these films are also characterized as "Glow-in-the-Dark" or "luminous" films.

: "Electroluminescent" means the ability of a material to convert electricity into visible light. Electroluminescent films are known and are commercially used to provide displays of information such as in automobiles or wristwatchs, so that persons in little ambient light can gain vital information.

Further features and advantages will be described with respect the following embodiments of the inventions, described with the following drawings.
FIG. 1 is a cross-sectional view of a first surface one way vision film having a luminescent film (not according to the present invention).
FIG. 2 is a cross-sectional view of a second surface one way vision film having a luminescent film (not according to the present invention) .
FIG. 3 is a cross-sectional view of another embodiment of the second surface one way vision film.
FIG. 4 is a second cross-sectional view of the second embodiment shown in FIG. 3.

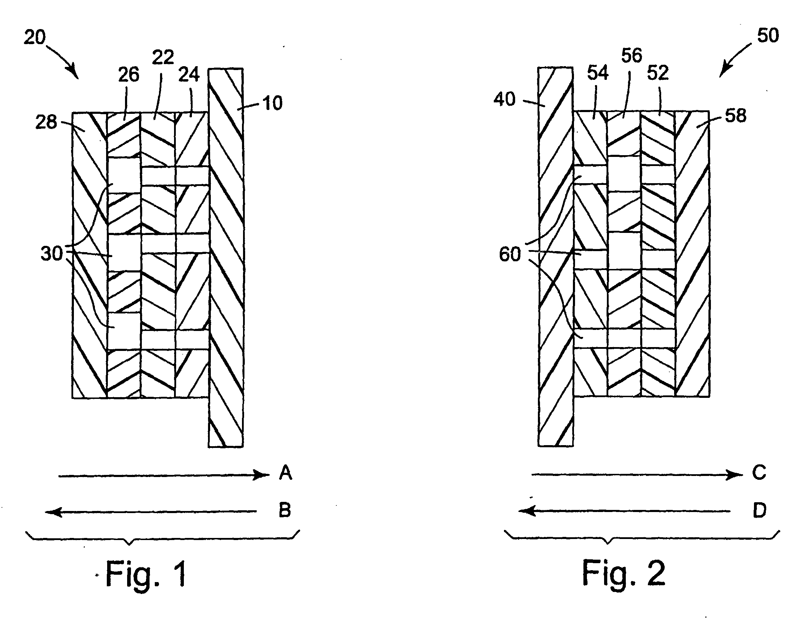

Fig. 1 shows a transparent or translucent substrate 10 having adhered to it a first surface one way vision film 20 (not according to the invention). A person viewing film 20 in the direction of arrow A will see an image, whereas a person viewing film 20 in the direction of arrow B will not see that image.

Film 20 comprises luminescent film 22 having a pressure sensitive adhesive 24 adhered to one major surface of luminescent film 22 and an image graphic 26 residing on the opposing major surface of luminescent film 22. Optionally but preferably, a transparent protective layer 28 is covering image graphic 26.

Perforations 30 through film 22, adhesive 24, and image graphic 26 provide the ability for persons to see both in the directions of arrows A and B. Protective layer 28 is not perforated, in order to protect the appearance of the image graphic 26 or the structural integrity of the composite of film 22, adhesive 24, and image graphic 26 particularly when one way vision film is mounted on the exterior of a window such as a passenger bus.

Film 22 typically has a caliper ranging from 0.02 mm to 0.50 mm and preferably from 0.08 mm to 0.33 mm.

Any film or tape having a photoluminescent major surface that is capable of receiving an image is suitable for use as luminescent film 22. Nonlimiting examples of such films or tapes include 3M™ Scotchcal™ Luminous Film Series 5700 from 3M of St. Paul. MN, USA. Series 5900 film is an adhesively-backed film having excellent chemical and stain resistance and bears a light yellowish green, environmentally benign, photoluminous major surface. In order to achieve the one way vision effect, the opposing major surface of luminescent film 22 must be black or a very dark color in order to cause a person viewing front the side opposite the imaged side to see through the perforations 30 without distraction. If a commercially available film does not have a black or very dark surface, the production of that film can be modified to make the surface black or very dark before adhering adhesive to that surface.

Any film or tape having an electroluminescent major surface that is capable of receiving an image is suitable for use as film 22. Nonlimiting examples of such films or tapes include Durel Electroluminescent Lamp Systems from Durel Corporation of Chandler, Arizona. USA. These lamps provide a high quality, cool. efficient and durable light source. They withstand severe environments and can be manufactured for specific brightness and color. They can be connected to sources of electrical power suitable for the image graphics industry.

Adhesive 24 can be any pressure sensitive adhesive that is suitable for the image graphics industry and benign to substrate 10 and luminescent film 22. Adhesive 24 can have a caliper ranging from 0.02 mm to 0.04 mm and preferably from 0.025 mm to 0.035 mm.

Nonlimiting examples or pressure sensitive adhesives include any conventional pressure sensitive adhesive that adheres to both substrate 10 and to the film 22. Pressure sensitive adhesives are generally described in Satas. Ed., Handbook of Pressure Sensitive Adhesives 2nd Ed. (Von Nostrand Reinhold 1989). Pressure sensitive adhesives are commercially available from a number of sources. Particularly preferred are acrylate pressure sensitive adhesives commercially available from Minnesota Mining and Manufacturing Company of St. Paul. Minnesola and generally described in U.S. Pat. Nos: 5,141,790, 4,605,592, 5,045,386, and 5,229,207 and EPO Patent Publication EP 0 570 515 131 (Steelman et al.).

Release liners to protect the adhesives before usage are also well known and commercially available from a number or sources. Nonlimiting examples of release liners include silicone coated kraft paper, silicone coated or polyethylene coated paper, silicone coated or non-coated polymeric materials such as polyethylene or polypropylene, as well as the aforementioned base materials coated with polymeric release agents such as silicone urea, urethanes, and long chain alkyl acrylates, such as defined in U.S. Pat. No. 3,957,724; 4,567,073; 4,313,988; 3,997,702; 4,614,667; 5,202,190; and 5,290,615; and those liners commecially available as Polyslik® brand liners from Rexam Release of Oakbrook, IL, USA and EXHERE® brand liners from P.H. Glatfelter Company of Spring Grove, PA, USA.

Image graphic 26 be a film adhered to luminescent film 22 or a colorant printed on film 22. To display the underlying luminescent film 22, image graphic need not cover the entire surface of film 22. For example, only from 10% to 90% and preferably from 25% to 50% of the surface area of film 22 need be covered by an image graphic film 26. Nonlimiting examples of films useful to make image graphics include 3M Graphic Marking Film® Series 220 and 230 used with electrocutting equipment such as marketed by Gerber Scientific Products of Manchester, CT, USA. When embodied as a film, image graphic 26 can have a caliper ranging from 0.04 mm to 0.08 mm and preferably from 0.05 mm to 0.07mm.

Preferably, image graphic 26 is a colorant or combinations of colorants (dye or pigment, or both) delivered to luminescent film 22 using screen printing techniques or digital imaging techniques. Screen printing or digital imaging techniques need not cover the entire film 22. Half tone patterns of image graphics 26 reveal sufficient amounts of the underlying film 22 in order for the luminescent effect of film 22 to be seen.

Screen printing is very well known to those skilled in art as providing a suitable image at limited cost.

Nonlimiting examples of digital imaging techniques include electrographic (electrostatic and electrophotographic) printing techniques, inkjet printing techniques, thermal transfer printing techniques, and the like. Depending the number of reproductions and the size of the image graphic, one can preferably choose electrostatic printing techniques or inkjet printing techniques, both described in more detail below.

Perforations 30 can be provided into one way vision film 20 either before or after image graphic 26 is placed on luminescent film 22. Preferably, one can perforate the combination of luminescent film 22, adhesive 24, and its release liner (not shown in Fig. 1) and sell that semi-finished product to printers who apply image graphics according to techniques described in U.S. Pat. No. 4,673,609 (Hill); U.S. Pat. No. 5,525,177 (Ross); U.S. Pat. No. 5,609,938 (Shields) WO 9842518 (Murphy et al.) and WO 9847026 (kuykendall et al.).

Perforation of the semi-finished combination of luminescent film 22 and adhesive 24 (with or without liner) can be performed by commercially available sources such as Southern Prestige Industries Inc. of Statesville, N.C., USA. where it is believed by the one way vision industry that perforations are made by diecutting techniques. Otherwise, one can employ the teachings of U.S. Pat. No. 5.530.346 (Andriash et al.) to provide a laser-cut perforated semi-finished combination.

The percentage of surface area of luminescent film 22 and adhesive 24 that is perforated can range From 40% to 60% and preferably from 45 to 55 percent. The percentage of perforated surface area depends on the importance of the extent of viewing from the side opposite the imaged side of one way vision film 20 and the extent one desires the imaged side to appear unperforated.

When offered as a semi-finished combination of perforated film 22 and adhesive 24, one skilled in the art of screen printing or digital imagine can place the image graphic 26 on luminescent film 22 in a manner that does not clog the perforations 30 or create any viewing of colorant in the perforations 30 that would distract a person viewing in direction of Arrow B in Fig. 1. Publications available to those skilled in the art to practice include U.S. Pat. No.: 5.525.177 (Ross) concerning electrostatic printing of perforated materials and PCT Publication WO 95/23034 concerning painting of perforated materials.

Otherwise, one skilled in the art could place the image graphic 26 on luminescent film 22 before perforating the one way vision film 20 as a completed combination. The availability of suitable perforating equipment is a limiting factor for this method.

Protection of one way vision film 20 can be provided by a protective layer 28, selected for its durability, transparency, and adhesiveness to image graphic 26 and luminescent film 22. Nonlimiting examples of protective layers include liquid-applied "clears" or overlaminate films. Nonlimiting examples of protective clears include the Model 8900 Series Scotchcal™ Protective Overlaminate materials from 3M. Nonlimiting examples of protective overlaminates include those materials disclosed in U.S. Pat. No. 5,681,660 (Bull et al.) and WO 9743128 (Bull et al.). and those materials marketed by 3M as Scotchprint™ 8626 and 3645 Overlaminate Films® Protective layer 28 has a caliper ranging from 0.01 mm to 0.16 mm and preferably From 0.01 mm to 0.02 mm.

While it is preferable to provide the luminescent eftect of film 22 to enhance the image graphic 26 viewed from the direction of arrow A in Fig. I, it is also possible to provide the same or different luminescent effect or film 22 for persons viewing in the direction of Arrow B. The same luminescent effect (reverse in appearance) will occur unless film 22 is backed with a blocking material such as another film or paint. A different luminescent effect can be obtained by matching film 22 with a second film having a different luminescent effect. This system can be preferred for use when the person viewing in the direction of Arrow B is unable to see anything because of the darkness in that direction. Then the luminescent effect in the direction of Arrow A can take over. For example one common commercial use of one way vision films occurs on passenger buses that enable passengers to see out of the windows during daylight. The luminescent effect of a second film, particularly if electroluminescent, can he turned on for the passenger's education, entertainment, or comfort when the bus is moving at night and there is nothing to sec outside of the bus.

Fig. 2 shows a second surface embodiment (not according to invention). The alteration of the order of layers comprising the one way vision film is the principal difference between one way vision film 20 on substrate 10 and one way vision film 50 on substrate 40. Film 50 comprises luminescent film 52 having on the side seen from the direction of Arrow C both adhesive 54 and image graphic 56. The adhesive 54 adheres film 50 to substrate 40 and encloses image graphic 56, obviating the need for any protective layer for the image graphic 56. However, optionally, one can provide an unperforated protective film 58 on the opposing side of luminescent film 52. Perforations 60 are provided in the same manner in film 50 as perforations 30 were in film 20. All other aspects of the elements 22, 24, 26, 28, and 30 in film 20 are the same or similar for the elements 52, 54, 56, 58, and 60, respectively, in film 50.

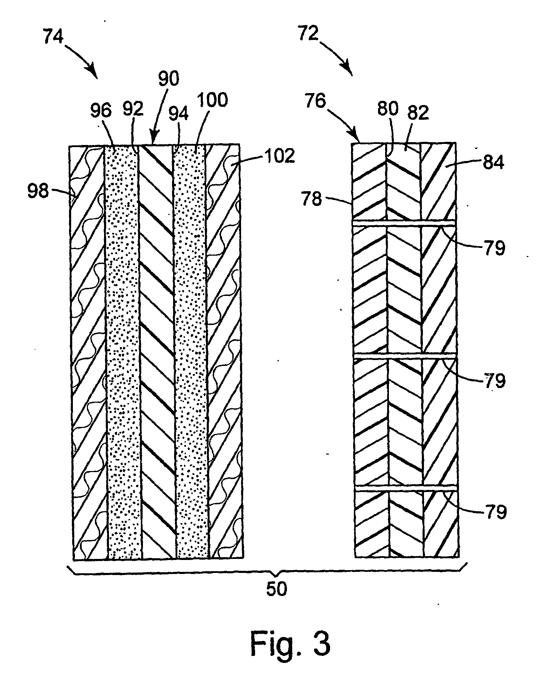

Alternatively, second surface embodiments can be made by a process, wherein the components 52, 54, 56, and optionally 58 are substituted with a two-part system that makes it easier to place an image graphic 56 on luminescent film 52 before applying an adhesive 54 thereto. As seen in FIG. 3. a schematic, cross sectional view of this embodiment according to the invention of one way vision film 50 is shown prior to imaging and lamination steps. The film 50 includes an imageable luminescent component 72 and an attachment component 74. The imageable component 72 is a multilayer film construction that includes an opaque, luminescent. imageable film layer 76 and an opaque light absorbing layer 82. The term opaque as used herein means impenetrable by visible light. i.e. neither transparent nor translucent. The opaque films can be dark colored or light colored, and can be treated to create surface properties to provide any desired appearance to the image layer. For example, the luminescent, imageable film layer 76 can include optional patterned layers (not shown in Fig. 3) that can be used to transfer a translucent "holographic" pattern to an image layer formed on the layer 76. The "holographic" pattern can be used to provide a decorative effect, or for product identification or security purposes.

The polymeric films selected for the luminescent, imageable film layer 76 can vary widely depending on the intended application, but vinyl films and polyolefin films are preferred. Poly(vinyl chloride) (PVC) films are particularly preferred. The films can be covered on their exposed surfaces by optional protective paper liners (not shown in Fig. 3). The thickness of the luminescent, imageable film layer 76 can vary widely depending on the intended application, but typically the layer 76 has a thickness of 0.0003 cm to 0.0013 cm (0.1 to 0.5 mils). The luminescent, imageable film layer 76 has a first major surface 78 and a second major surface 80. The first major surface 78 of the luminescent, imageable film layer 76 is designed to have printed thereon an image with at least two colors, preferably four or more colors. As is well known in the art, the surface 78 can be modified or can include additional layers to enhance adhesion of a particular ink, dye or toner. The surface 78 typically has a light color, preferably white, to make the image printed thereon appear more distinct to an observer. The surface 78 can be modified to have a shiny finish or a matte finish, depending on the intended application.

Adjacent the second major surface 80 of the luminescent, imageable film layer 76 is an opaque, light absorbing film layer 82. The term light absorbing as used herein refers to materiais that do not reflect visible light. Typically, the light absorbing film layer 82 is darkly colored, preferably black. The polymeric films selected for the light absorbing layer 82 can vary widely depending on the intended application, but vinyl films and polyolefin films arc preferred. Poly(vinyl chloride) (PVC) films are particularly preferred. The films can be covered on their exposed surfaces by removable, protective paper liners (not shown in Fig. 3). The thickness of the light absorbing film layer 82 can vary widely depending on the intended application, but typically the layer 82 has a thickness of 0.0025 cm to 0.013 cm (1.0 to 5.0 mils). The surfaces of the light absorbing film layer can also be modified to provide any desired finish, and a matte finish is desired for most second surface window applications. The use of the light absorbing film layer 82 allows the end user to tailor the finish of the absorbing layer 82 for an particular application, and such control is not available if conventional screen printed black inks are used. This is particularly important since the absorbing layer 82 is normally exposed to the viewer when the graphic articles of the present invention are used in second surface window applications.

The luminescent, imageable film layer 76 and the light absorbing film layer 82 can be adhered to one another by any conventional technique, and normally are co-extruded polymeric films.

To provide the graphic articles of the present invention with unidirectional properties, the opaque luminescent, imageable film layer 76 and the light absorbing layer 82 are perforated. The term perforated as used herein refers to materials that have been punched with a plurality of apertures. The diameter of each aperture can vary widely depending on the required density to match the desired viewing distance. If used in second surface window applications, the apertures must be sized and spaced to allow an observer outside the window to view an image printed on the luminescent, imageable layer, while an observer inside the window to have a substantially unobstructed view through the graphic article. The apertures can be circular, square, triangular or any other shape, and can form a regular or irregular repeating pattern. Preferably, the apertures are circular and have a diameter of 0.0005 mm to 0.002 mm (0.02 to 0.08 mils), and a diameter of 0.0015 mm (0.060 mils) is preferred for most second surface window applications. Within these ranges, about 10-70% of the luminescent, imageable film layer 76 and the light absorbing layer 82 will comprise open space. The apertures can be made in any conventional manner, such as by dye cutting, punching, or with a laser.

An optional second perforated imageable film layer 84 can be attached to the light absorbing film layer 82 if printing a second image is desired for a particular application. The second imageable film layer 84 can the same or different than the imageable film layer 76, but the second imageable film layer 84 is normally a white or light colored polymeric film.

An optional substantially transparent protective film layer (not shown in Fig. 3) can also be attached to the light absorbing film layer 82 to prevent entry of dust, dirt and cleaning solvents into the finished graphic article.

The second component of the graphic article of the present invention is the attachment component 74. The attachment component 74 includes a substantially transparent and non-perforated scrim layer 90. The term substantially transparent as used herein means that an image applied on the first major surface 78 of the luminescent, imageable film layer 76 can be viewed through the scrim layer 90 such that the presence of the scrim layer 90 does not detract from the appearance of the image when the attachment component 74 is laminated to the luminescent, imageable component 72 to form a completed graphic article. The scrim layer 90 can be any continuous, polymeric film. Polyester films are preferred for most second surface window applications, such as for example, those available under the trade name Scotchpak from 3M Company, St. Paul, Minnesota, USA (3M).

To a first major surface 92 of the scrim layer 90, a pressure sensitive adhesive layer 96 is applied. The pressure sensitive adhesive layer 96 is used to attach the completed graphic article to a substantially transparent substrate, and any known pressure sensitive adhesive can he used, as long is it is substantially clear so that an image on the luminescent, imageable film layer 76 is not obscured when the attachment component 74 is laminated to the luminescent, imageable component 72. It is also particularly preferred that the adhesive used to form the pressure sensitive adhesive layer 96 he removable from a selected substrate. As used herein, the term removable means that the pressure sensitive adhesive layer 96 should preferably be selected to permit the graphic article of the present invention to be easily removed from a substrate without leaving substantial adhesive residue on the substrate. Polyurethane based adhesives and acrylic pressure sensitive adhesives have been found to work well to form the adhesive layer 96. The pressure sensitive adhesive layer 96 can be protected by an optional release liner 98. Useful liners include silicone coated paper or polymeric films.

A second major surface 94 of the scrim layer 90 has applied thereon a layer 100 of a substantially transparent heat activated ("hot melt") adhesive. Any substantially transparent bent activated adhesive layer can he used in the layer 100, and ethylene vinyl alcohol (EVA) and ethylene acrylic acid (EAA) adhesives have been found to work well for second surface window applications. The heat activated adhesive layer 100 can be protected by an optional release liner 102. Useful liners include silicone coated paper or polymeric films.

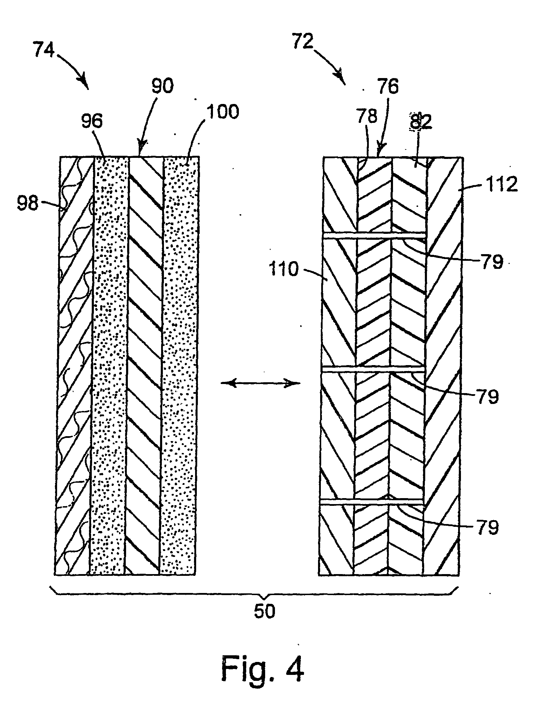

To create a graphic article of the present invention, the end user must first image the luminescent, imageable component 72. As shown in Fig. 4, a discontinuous image layer 110 is formed on the first major surface 78 of the luminescent, imageable film layer 76. Since the luminescent, imageable film layer 76 is perforated with a plurality of apertures, the image layer 110 will be not be formed in the apertures, but only in the land areas surrounding the apertures. When the graphic article of the present invention is viewed closely, the apertures will be apparent and the image will appear discontinuous. However, at a normal viewing distance from the graphic article, the human eye will act to resolve the discontinuous image into a continuous image, and the apertures will not be visible.

The image layer 110 can be comprised of one or more color layers, any of which can be applied continuously or discontinuously to form an informational or decorative design. The specific number of color layers used for a particular application can be dictated by the desired visual impact of the graphic article and printing cost. However, several color layers are particularly preferred to provide an image layer with significant advertising impact. These multi-color image layers are typically digitally created and applied in one pass through a large format printer to provide an image with photograph-like realism. The color layers making up the image layer 110 can be applied by any known printing or painting method for forming an image on a polymeric film, including, for example, screen printing, electrographic (electrostatic and electrophotographic) printing, offset printing, thermal ink jet printing or thermal mass transfer. A preferred printing process for vinyl base layers is the electrostatic printing process available from 3M. St. Paul, Minnesota, USA, under the trade name "Scotchprint" and "Scotchprint 2000." Following the imaging step to form the image layer 110, an optional clear protective layer 112 can be laminated to the light absorbing layer 82 to prevent entry of dirt and cleaning solvents into the perforations in the luminescent, imageable component.

Alternatively to that seen in Figs. 3 and 4, second surface embodiments can be made using a luminous ink or toner applied to film 52 on the side seen from the direction of Arrow C.

Alternatively, second surface embodiments can be made by placing image 56 on film 52 before applying adhesive 54.

### Digital Imaging: Electrostatic Hardware and Software

Electrostatic transfer for digital imaging employs a computer to generate an electronic digital image, an electrostatic printer to convert the electronic digital image to a multicolor toned image on a transfer medium, and a laminator to transfer the toned image to a durable substrate.

Nonlimiting examples of electrostatic printing systems include the Scotchprint™ Electronic Graphics System from 3M. This system employs the use of personal computers and electronically stored and manipulated images. Nonlimiting examples of electrostatic printers are single-pass printers (Models 9510 and 9512 from Nippon Steel Corporation of Tokyo, Japan and the Scotchprint™ 2000 Electrostatic Printer from 3M) and multiple-pass printers (Model 8900 Series printers from Xerox Corporation of Rochester NY, USA and Model 5400 Series from Raster Graphics of San Jose, CA, USA)

Nonlimiting examples of electrostatic toners include Model 8700 Series toners from 3M. Nonlimiting examples of transfer media include Model 8600 media (e.g., 8601, 8603, and 8605) from 3M.

Nonlimiting examples of laminators for transfer of the digital electrostatic image include Orca III laminator from GBC Protec, DeForest, WI.

### Digital Imaging: Ink Jet Hardware and Software

Thermal ink jet hardware is commercially available from a number of multinational companies, including without limitation, Hewlett-Packard Corporation of Palo Alto, CA, USA; Encad Corporation of San Diego, CA, USA; Xerox Corporation of Rochester, NY, USA; LaserMaster Corporation of Eden Prairie, MN, USA; and Mimaki Engineering Co., Ltd. of Tokyo, Japan. The number and variety of printers changes rapidly as printer makers are constantly improving their products for consumers. Printers are made both in desk-top size and wide format size depending on the size of the finished graphic desired. Nonlimiting examples of popular commercial scale thermal ink jet printers are Encad's NovaJet Pro printers and H-P's 650C and 750C printers. Nonlimiting examples of popular desk-top thermal ink jet printers include H-P's DeskJet printers.

Nonlimiting examples of manufacturers of piezo ink jet printers include Raster Graphics Inc., Gerber Scientific Products Inc., Xerox Corporation, and Seiko Epson Corporation.

3M markets Graphic Maker Ink Jet software useful in converting digital images from the Internet, ClipArt, or Digital Camera sources into signals to thermal ink jet printers to print such images.

Ink jet inks are also commercially available from a number of multinational companies, particularly 3M which markets its Series 8551; 8552; 8553; and 8554 pigmented ink jet inks. The use of four principal colors: cyan, magenta, yellow, and black permit the formation of as many as 256 colors or more in the digital image.

### Usefulness of the Invention

Luminescent perforated films offer a myriad of opportunities to entertain, educate, decorate, adorn, warn, or inform those who encounter the imaged films in a darkened one way vision environment. Nonlimiting examples of uses of imaged films of the present invention include complex graphic images of warning signage in factories, novelty displays in amusement parks, and artistic or architectural embellishments on transparent or translucent walls, ceilings, or floors.

Illumination for photoluminescent films can be provided by natural sunlight, artificial incandescent light, artificial mercury light, artificial fluorescent light, or "black lights". Electroluminescent films have their own power source.

Those skilled in the art of government regulated warning signage can provide specific images of particular machinery with different warnings depending on the illumination or darkened area in which the machinery is placed.

Those skilled in the art of military identification can provide detailed escape instructions for military service personnel working below deck of a warship.

Those skilled in the art of digital mapping can provide glow-in-the-dark travel routes for persons driving or piloting in a darkened environment.

Those skilled in the art of interior decoration can provide children's entertainment images for windows and room dividers where one image is seen in an illuminated environment and a different luminescent image seen in a darkened environment. If sufficient luminescent images remain in a darkened environment, the image can provide a soothing image to view as children are falling asleep.

Those skilled in the art of novelty entertainment can emphasize photoluminescent images for a teenage audience by atternating light strobes for an illuminated sinister image and an even more grotesque luminescent image in the totally dark environment.

Those skilled in the art of advertising products can employ image graphics of the present invention to emphasize specific features of the product by darkening the illuminated image periodically or episodically. The image graphic can become a passive atternative to neon light illumination of a sign.

## Claims

1. A combination for preparing a one way vision film comprising:
(a) an imageable luminescent component 72 comprising:
(i) a perforated, opaque light absorbing layer 82; and
(ii) a perforated, opaque, luminescent, imageable film layer 76; as well as
(b) an attachment component 74 comprising:
(iv) a substantially transparent hot melt adhesive layer 100;
(v) a substantially transparent, non-perforated scrim layer 90; and
(vi) a substantially clear pressure sensitive adhesive layer 96.

2. The combination according to claim 1 further comprising a perforated image layer 110 on the luminescent, imageable film layer 76.

3. The combination according to claim 1 or 2 further comprising a release liner attached to the hot melt adhesive layer 100 and/or the pressure sensitive adhesive layer 96.

4. A one way vision film comprising the following components in the following order :
(i) a perforated, opaque light absorbing layer 82;
(ii) a perforated, opaque, luminescent, imageable film layer 76;
(iii) a perforated image layer 110;
(iv) a substantially transparent hot melt adhesive layer 100;
(v) a substantially transparent, non-perforated scrim layer 90; and
(vi) a substantially clear pressure sensitive adhesive layer 96.

5. The one way vision film according to claim 4 further comprising a release liner 102 attached to the hot melt adhesive layer 100.

6. The combination according to claim 1 or the one way vision film according to claim 4 further comprising a second perforated imageable film layer 84 attached to the light absorbing layer 82.

7. The combination according to claim 1 or the one way vision film according to claim 4 further comprising a substantial transparent non-perforated protective film layer attached to the light absorbing layer 82.

8. The combination according to claim 1 or the one way vision film according to claim 4 wherein the luminescent, imageable film layer 76 is electroluminescent or photoluminescent.

9. The combination according to claim 1 or the one way vision film according to claim 4 wherein the luminescent, imageable film layer 76 is a polymeric film having a white surface 78.

10. The combination according to claim 1 or the one way vision film according to claim 4 wherein the second imageable film layer 84 is the same or different than the luminescent, imageable film layer 76.

11. The combination according to claim 1 or the one way vision film according to claim 4 wherein the pressure sensitive adhesive layer 96 is selected from the group consisting of polyurethane based adhesives or acrylic pressure sensitive adhesives.

12. The combination according to claim 1 or the one way vision film according to claim 4 wherein the hot melt adhesive layer 100 is selected from the group consisting of ethylene vinyl alcohol adhesives and ethylene acrylic acid adhesives.

13. The combination according to claim 1 or the one way vision film according to claim 4 wherein the scrim layer 90 is a polyester film.

14. A process for preparing a one way vision film comprising the steps of:
(a) providing an imageable luminescent component 72 comprising:
(i) a perforated, opaque light absorbing layer 82; and
(ii) a perforated, opaque; luminescent, imageable film layer 76;
(b) providing an attachment component 74 comprising:
(iv) a substantially transparent hot melt adhesive layer 100;
(v) a substantially transparent, non-perforated scrim layer 90; and
(vi) a substantially clear pressure sensitive adhesive layer 96;
(c) imaging the imageable luminescent component 72 to form a perforated image layer 110 on the surface of the luminescent, imageable film layer 76; and
(d) laminating the imageable luminescent component 72 and the attachment component 74 together to form the one way vision film.

## Patentansprüche

1. Kombination zur Herstellung einer einseitig durchsehbaren Folie, umfassend:
(a) eine bebildbare, lumineszierende Komponente 72, umfassend:
(i) eine perforierte, opake, lichtabsorbierende Schicht 82; und
(ii) eine perforierte, opake, lumineszierende, bebildbare Folienschicht 76; sowie
(b) eine Befestigungskomponente 74, umfassend:
(iv) eine im Wesentlichen transparente Schmelzklebstoffschicht 100; statt
(v) eine im Wesentlichen transparente, nichtperforierte Gitterstoffschicht 90; und
(vi) eine im Wesentlichen klare Haftklebstoffschicht 96.

2. Kombination gemäß Anspruch 1, welche weiterhin eine perforierte Bildschicht 110 auf der lumineszierenden, bebildbaren Folienschicht 76 umfasst.

3. Kombination gemäß Anspruch 1 oder 2, welche weiterhin eine an der Schmelzklebstoffschicht 100 und/oder an der Haftklebstoffschicht 96 befestigte Trennmittellage umfasst.

4. Einseitig durchsehbare Folie, umfassend die nachstehenden Komponenten in der nachstehenden Reihenfolge:
(i) eine perforierte, opake, lichtabsorbierende Schicht 82;
(ii) eine perforierte, opake, lumineszierende, bebildbare Folienschicht 76;
(iii) eine perforierte Bildschicht 110;
(iv) eine im Wesentlichen transparente Schmelzklebstoffschicht 100;
(v) eine im Wesentlichen transparente, nichtperforierte Gitterstoffschicht 90; und
(vi) eine im Wesentlichen klare Haftklebstoffschicht 96.

5. Einseitig durchsehbare Folie gemäß Anspruch 4, welche weiterhin eine an der Schmelzklebstoffschicht 100 befestigte Trennmittellage 102 umfasst.

6. Kombination gemäß Anspruch 1 oder die einseitig durchsehbare Folie gemäß Anspruch 4, weiterhin umfassend eine zweite perforierte, bebildbare Folienschicht 84, welche an der lichtabsorbierenden Schicht 82 befestigt ist.

7. Kombination gemäß Anspruch 1 oder die einseitig durchsehbare Folie gemäß Anspruch 4, weiterhin umfassend eine im Wesentlichen transparente, nichtperforierte Schutzfolienschicht, welche an der lichtabsorbierenden Schicht 82 befestigt ist.

8. Kombination gemäß Anspruch 1 oder die einseitig durchsehbare Folie gemäß Anspruch 4, wobei die lumineszierende, bebildbare Folienschicht 76 elektrolumineszierend oder photolumineszierend ist.

9. Kombination gemäß Anspruch 1 oder die einseitig durchsehbare Folie gemäß Anspruch 4, wobei die lumineszierende, bebildbare Folienschicht 76 eine Polymerfolie mit einer weißen Oberfläche 78 ist.

10. Kombination gemäß Anspruch 1 oder die einseitig durchsehbare Folie gemäß Anspruch 4, wobei die zweite bebildbare Folienschicht 84 zu der lumineszierenden, bebildbaren Folienschicht 76 gleich oder verschieden ist.

11. Kombination gemäß Anspruch 1 oder die einseitig durchsehbare Folie gemäß Anspruch 4, wobei die Haftklebstoffschicht 96 aus auf Polyurethan basierenden Klebstoffen oder Acrylhaftklebstoffen ausgewählt ist.

12. Kombination gemäß Anspruch 1 oder die einseitig durchsehbare Folie gemäß Anspruch 4, wobei die Schmelzklebstoffschicht 100 aus Ethylen/Vinylalkoholklebstoffen und Ethylen/Acrylsäureklebstoffen ausgewählt ist.

13. Kombination gemäß Anspruch 1 oder die einseitig durchsehbare Folie gemäß Anspruch 4, wobei die Gitterstoffschicht 90 eine Polyesterfolie ist.

14. Verfahren zur Herstellung einer einseitig durchsehbaren Folie, umfassend die Schritte:
(a) Bereitstellen einer bebildbaren, lumineszierenden Komponente 72, umfassend:
(i) eine perforierte, opake, lichtabsorbierende Schicht 82; und
(ii) eine perforierte, opake, lumineszierende, bebildbare Folienschicht 76;
(b) Bereitstellen einer Befestigungskomponente 74, umfassend:
(iv) eine im Wesentlichen transparente Schmelzklebstoffschicht 100;
(v) eine im Wesentlichen transparente, nichtperforierte Gitterstoffschicht 90; und
(vi) eine im Wesentlichen klare Haftstoffschicht 96;
(c) Bebildern der bebildbaren, lumineszierenden Komponente 72, um eine perforiert Bildschicht 110 auf der Oberfläche der lumineszierenden, bebildbaren Folienschicht 76 zu erzeugen; und
(d) Zusammenlaminieren der bebildbaren, lumineszierenden Komponente 72 und der Befestigungskomponente 74, um die einseitig durchsehbare Folie zu erzeugen.

## Revendications

1. Combinaison pour la préparation d'un film à vision unidirectionnelle comprenant :
(a) un composant luminescent 72 apte à former une image comprenant :
(i) une couche perforée, opaque, absorbant la lumière 82 ; et
(ii) une couche de film perforé, opaque, luminescent, apte à former une image 76 ; ainsi que
(b) un composant de fixation 74 comprenant :
(iv) une couche adhésive thermofusible essentiellement transparente 100 ;
(v) une couche non tissée non perforée, essentiellement transparente 90 ; et
(vi) une couche adhésive sensible à la pression essentiellement claire 96.

2. Combinaison selon la revendication 1 comprenant en outre une couche image perforée 110 sur la couche de film luminescent, apte à former une image 76.

3. Combinaison selon la revendication 1 ou 2 comprenant en outre une couche antiadhérente liée à la couche adhésive thermofusible 100 et/ou à la couche adhésive sensible à la pression 90.

4. Film à vision unidirectionnelle comprenant les composants suivants dans l'ordre suivant :
(i) une couche perforée, opaque, absorbant la lumière 82 ;
(ii) une couche de film perforé, opaque, luminescent, apte à former une image 76 ;
(iii) une couche image perforée 110 ;
(iv) une couche adhésive thermofusible essentiellement transparente 100 ;
(v) une couche non tissée non perforée, essentiellement transparente 90 ; et
(vi) une couche adhésive sensible à la pression essentiellement claire 96.

5. Film à vision unidirectionnelle selon la revendication 4 comprenant en outre une couche antiadhérente 102 liée à la couche adhésive thermofusible 100.

6. Combinaison selon la revendication 1 ou film à vision unidirectionnelle selon la revendication 4 comprenant en outre une seconde couche de film perforé apte à former une image 84 liée à la couche absorbant la lumière 82.

7. Combinaison selon la revendication 1 ou film à vision unidirectionnelle selon la revendication 4 comprenant en outre une couche de film protecteur essentiellement transparent non perforé liée à la couche absorbant la lumière 82.

8. Combinaison selon la revendication 1 ou film à vision unidirectionnelle selon la revendication 4 dans lequel la couche de film luminescent, apte à former une image 76 est électroluminescente ou photo-luminescente.

9. Combinaison selon la revendication 1 ou film à vision unidirectionnelle selon la revendication 4 dans lequel la couche de film luminescent, apte à former une image 76 est un film polymérique ayant une surface blanche 78.

10. Combinaison selon la revendication 1 ou film à vision unidirectionnelle selon la revendication 4 dans lequel la seconde couche de film apte à former une image 84 est identique ou différente de la couche de film luminescent, apte à former une image 76.

11. Combinaison selon la revendication 1 ou film à vision unidirectionnelle selon la revendication 4 dans lequel la couche adhésive sensible à la pression 96 est choisie dans le groupe constitué des adhésifs à base de polyuréthane ou des adhésifs acryliques sensibles à la pression.

12. Combinaison selon la revendication 1 ou film à vision unidirectionnelle selon la revendication 4 dans lequel la couche adhésive thermofusible 100 est choisie dans le groupe constitué des adhésifs éthylène alcool vinylique et des adhésifs éthylène acide acrylique.

13. Combinaison selon la revendication 1 ou film à vision unidirectionnelle selon la revendication 4 dans lequel la couche non tissée 90 est un film de polyester.

14. Procédé de préparation d'un film à vision unidirectionnelle comprenant les étapes consistant à :
(a) mettre à disposition un composant luminescent apte à former une image 72 comprenant :
(i) une couche perforée, opaque, absorbant la lumière 82 ; et
(ii) une couche de film perforé, opaque, luminescent, apte à former une image 76 ;
(b) mettre à disposition un composant de liaison 74 comprenant :
(iv) une couche adhésive thermofusible essentiellement transparente 100 ;
(v) une couche non tissée non perforée, essentiellement transparente 90 ; et
(vi) une couche adhésive sensible à la pression essentiellement claire 96 ;
(c) former une image du composant luminescent apte à former une image 72 pour former une couche image perforée 110 sur la surface de la couche de film luminescent, apte à former une image 76 :
(d) stratifier le composant luminescent apte à former une image 72 et le composant de liaison 74 pour qu'ils forment ensemble le film à vision unidirectionnelle.
